# EUROPEAN PATENT APPLICATION

(11) **EP 4 610 114 A1**
(43) Date of publication of application: **03.09.2025**
(21) Application number: 25159361.2
(22) Date of filing: 21.02.2025
(51) Int. Cl.: B60R 16/023, B60R 16/027

(54) **ELECTRICAL AND DATA CONNECTION FOR ROTARY INTERFACE OF A STEERING WHEEL AND STEERING COLUMN CONNECTION**

(30) Priority: 27.02.2024 US 202463558350 P; 19.02.2025 US 202519057255
(71) Applicant: GHSP, INC., Holland, MI 49423 (US)
(72) Inventor: Bagley, John Thomas, Holland, 49423 (US); Bays, Jeffrey Lee, Holland, 49423 (US)
(74) Representative: Hepworth Browne

(57) **Abstract**

A steering system (130) for a vehicle (40) includes a steering column (14) that is configured to be in communication with a steering assembly (16) and that has a steering shaft (132) that rotationally operates within a sleeve (134), a steering wheel (12) that is attached to the steering shaft (132) for operating the steering assembly (16) and that includes a user interface (30), and a control interface (10) that extends between the steering wheel (12) and the steering column (14). The control interface (10) has a first portion (20) coupled with the steering column (14), and a second portion (22) coupled with the steering wheel (12). The second portion (22) rotationally operates with respect to the first portion (20). The first portion (20) and the second portion (22) are in wireless communication with one another to place the user interface (30) in communication with a controller (32) that operates at least one electrical control system (42).

## Description

### CROSS-REFERENCE TO RELATED APPLICATION

This application claims priority to and the benefit under 35 U.S.C. §119(e) of U.S. Provisional Patent Application No. 63/558,350, filed on February 27, 2024, entitled ELECTRICAL AND DATA CONNECTION FOR ROTARY INTERFACE OF A STEERING WHEEL AND STEERING COLUMN CONNECTION, the entire disclosure of which is hereby incorporated herein by reference.

### FIELD OF THE DISCLOSURE

The present disclosure generally relates to steering assemblies for vehicles, and more specifically, to a rotary interface that provides for data and electrical communication between a steering wheel and a steering column for preventing wear and tear with respect to wires extending between the steering wheel and steering column.

### BACKGROUND OF THE DISCLOSURE

Within conventional vehicles, a steering wheel can include various user interface mechanisms for controlling systems within a vehicle. Such systems can include audio systems, telephone communication systems, voice activation systems, and other similar vehicle systems. For operating the systems, electrical power and data communications need to be transferred between the steering wheel and to the remainder of the vehicle via the steering column. Necessarily, these systems require electrical power and data connections that can extend between the rotary interface and the steering wheel with respect to the steering column.

### SUMMARY OF THE DISCLOSURE

According to one aspect of the present disclosure, a steering system for a vehicle includes: a steering column that is configured to be in communication with a steering assembly and that has a steering shaft that rotationally operates within a sleeve; a steering wheel that is attached to the steering shaft for operating the steering assembly and that includes a user interface; and, a control interface that extends between the steering wheel and the steering column. The control interface has a first portion coupled with the steering column, and a second portion coupled with the steering wheel. The second portion rotationally operates with respect to the first portion. The first portion and the second portion are in wireless communication with one another to place the user interface in communication with a controller that operates at least one electrical control system.

According to another aspect of the present disclosure, a steering system for a vehicle includes: a steering column having a steering shaft that rotates within a sleeve and that is configured to be in communication with a steering assembly; a steering wheel that is attached to the steering shaft for operating the steering assembly, that includes a user interface, and that is configured to be disposed within a passenger cabin; a plurality of electrical control systems that are operated by a controller that is external to the steering wheel and the steering column; and, a control interface having a first portion coupled to the sleeve of the steering shaft, and a second portion coupled with at least one of the steering wheel and the steering shaft. The first portion and the second portion are in wireless communication with one another to place the user interface in communication with at least one electrical control system of the plurality of electrical control systems.

According to yet another aspect of the present disclosure, a steering system for a vehicle includes: a steering column that is configured to be in communication with a steering assembly; a steering wheel that is attached to the steering column for operating the steering assembly; and, a control interface that extends between the steering wheel and the steering column. The control interface has a first portion attached to the steering column, and a second portion attached to the steering wheel. The second portion rotationally operates relative to the first portion, and the first portion and the second portion are in wireless communication with one another.

These and other features, advantages, and objects of the present disclosure will be further understood and appreciated by those skilled in the art by reference to the following specification, claims, and appended drawings.

### BRIEF DESCRIPTION OF THE DRAWINGS

In the drawings:
FIG. 1 is a perspective view of an exemplary prior art steering column that incorporates a user interface;
FIG. 2 is a perspective view of a prior art steering column with the steering wheel removed and exposing the electrical power and data contacts that extend therebetween;
FIG. 3 is an exemplary prior art rotary wire harness that is installed between the connection of the steering wheel and the steering column for transferring electricity and data communications therebetween;
FIG. 4 is an exploded schematic view of a steering wheel separated from a steering column;
FIG. 5 is a schematic diagram illustrating a control interface that extends between a steering wheel and a steering column for delivering electricity and data communications therebetween;
FIG. 6(a) is an exemplary configuration of the control interface that extends between the steering wheel and the steering column of the vehicle;
FIG. 6(b) is an exemplary illustration of a coil that is incorporated within the control interface of FIG. 6(a);
FIG. 7(a) is an exemplary configuration of the control interface that extends between the steering wheel and the steering column of the vehicle; and
FIG. 7(b) is an exemplary configuration of capacitive resonator electrodes that are incorporated within the control interface of FIG. 7(a).

The components in the figures are not necessarily to scale, emphasis instead being placed upon illustrating the principles described herein.

### DETAILED DESCRIPTION

As required, detailed embodiments of the present disclosure are disclosed herein; however, it is to be understood that the disclosed embodiments are merely exemplary of the invention that may be embodied in various and alternative forms. The figures are not necessarily to a detailed design; some schematics may be exaggerated or minimized to show function overview. Therefore, specific structural and functional details disclosed herein are not to be interpreted as limiting, but merely as a representative basis for teaching one skilled in the art to variously employ the present invention.

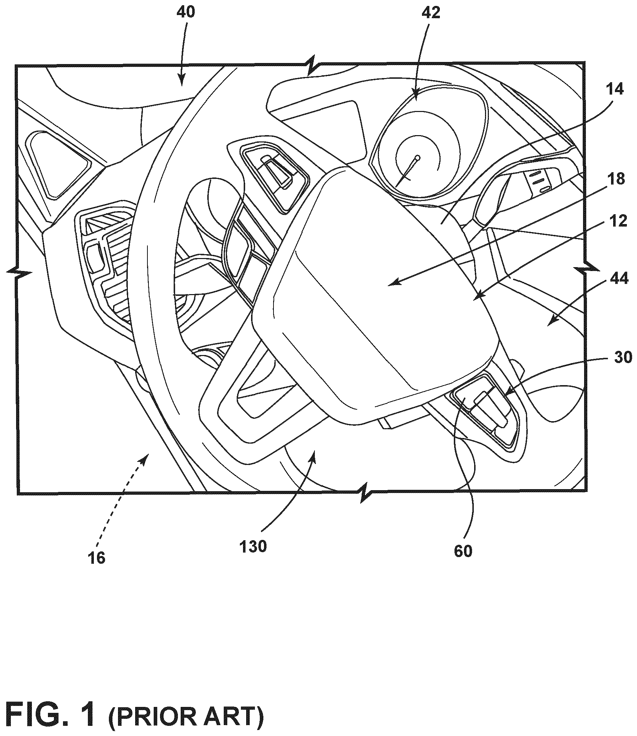

For purposes of description herein, the terms "upper," "lower," "right," "left," "rear," "front," "vertical," "horizontal," and derivatives thereof shall relate to the concepts as oriented in FIG. 1. However, it is to be understood that the concepts may assume various alternative orientations, except where expressly specified to the contrary. It is also to be understood that the specific devices and processes illustrated in the attached drawings, and described in the following specification, are simply exemplary embodiments of the inventive concepts defined in the appended claims. Hence, specific dimensions and other physical characteristics relating to the embodiments disclosed herein are not to be considered as limiting, unless the claims expressly state otherwise.

The present illustrated embodiments reside primarily in combinations of method steps and apparatus components related to a rotary control interface between a steering wheel and steering column of a vehicle that is utilized for transferring electricity and data communications therebetween that minimizes damage to wired connections within the control interface. Accordingly, the apparatus components and method steps have been represented, where appropriate, by conventional symbols in the drawings, showing only those specific details that are pertinent to understanding the embodiments of the present disclosure so as not to obscure the disclosure with details that will be readily apparent to those of ordinary skill in the art having the benefit of the description herein. Further, like numerals in the description and drawings represent like elements.

As used herein, the term "and/or," when used in a list of two or more items, means that any one of the listed items can be employed by itself, or any combination of two or more of the listed items, can be employed. For example, if a composition is described as containing components A, B, and/or C, the composition can contain A alone; B alone; C alone; A and B in combination; A and C in combination; B and C in combination; or A, B, and C in combination.

In this document, relational terms, such as "first" and "second," "top" and "bottom," and the like, are used solely to distinguish one entity or action from another entity or action, without necessarily requiring or implying any actual such relationship or order between such entities or actions. The terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element preceded by "comprises ... a" does not, without more constraints, preclude the existence of additional identical elements in the process, method, article, or apparatus that comprises the element.

As used herein, the term "about" means that amounts, sizes, formulations, parameters, and other quantities and characteristics are not and need not be exact, but may be approximate and/or larger or smaller, as desired, reflecting tolerances, conversion factors, rounding off, measurement error and the like, and other factors known to those of skill in the art. When the term "about" is used in describing a value or an end-point of a range, the disclosure should be understood to include the specific value or end-point referred to. Whether or not a numerical value or end-point of a range in the specification recites "about," the numerical value or end-point of a range is intended to include two embodiments: one modified by "about," and one not modified by "about." It will be further understood that the end-points of each of the ranges are significant both in relation to the other end-point, and independently of the other end-point.

The terms "substantial," "substantially," and variations thereof as used herein are intended to note that a described feature is equal or approximately equal to a value or description. For example, a "substantially planar" surface is intended to denote a surface that is planar or approximately planar. Moreover, "substantially" is intended to denote that two values are equal or approximately equal. In some embodiments, "substantially" may denote values within about 10% of each other, such as within about 5% of each other, or within about 2% of each other.

As used herein the terms "the," "a," or "an," mean "at least one," and should not be limited to "only one" unless explicitly indicated to the contrary. Thus, for example, reference to "a component" includes embodiments having two or more such components unless the context clearly indicates otherwise.

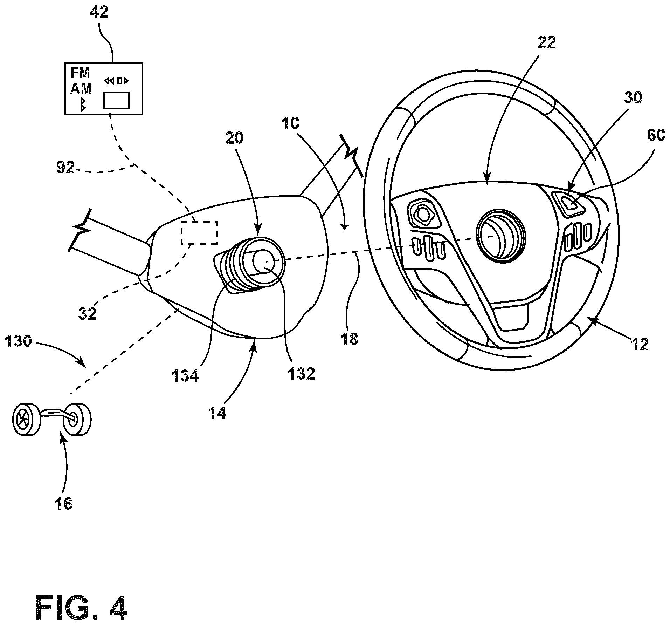

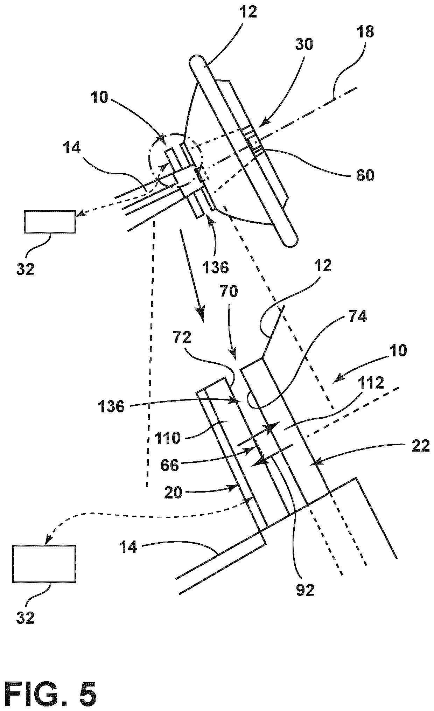

As exemplified in FIGS. 4-7(b), reference numeral 10 generally designates a control interface that extends between a steering wheel 12 and a steering column 14 for transferring electricity and data communications therebetween. This communication is in the form of wireless communication. According to the various aspects of the device, a vehicle 40 can include the steering column 14 that is in communication with a steering assembly 16. The steering wheel 12 is attached to the steering column 14 along a rotational axis 18 for operating the steering assembly 16. The control interface 10 extends between the steering wheel 12 and the steering column 14. The control interface 10 includes a first portion 20 disposed on or within the steering column 14, and a second portion 22 disposed on or within the steering wheel 12. The first portion 20 and the second portion 22 operate rotationally with respect to one another about the rotational axis 18. Typically, this control interface 10 is free of wires, or substantially free of wires, extending between the first portion 20 and the second portion 22, as will be described more fully below.

Typically, the first portion 20 of the control interface 10 is stationary as the steering column 14 does not rotate. The second portion 22 of the control interface 10, because it is attached to the steering wheel 12, is designed to rotate about the rotational axis 18. Because of this, electrical power for the control interface 10 is typically directed to the first portion 20 using a hard-wired connection. Electrical power is then delivered to the second portion 22 and a user interface 30 of the steering wheel 12, wirelessly, through operation of the control interface 10.

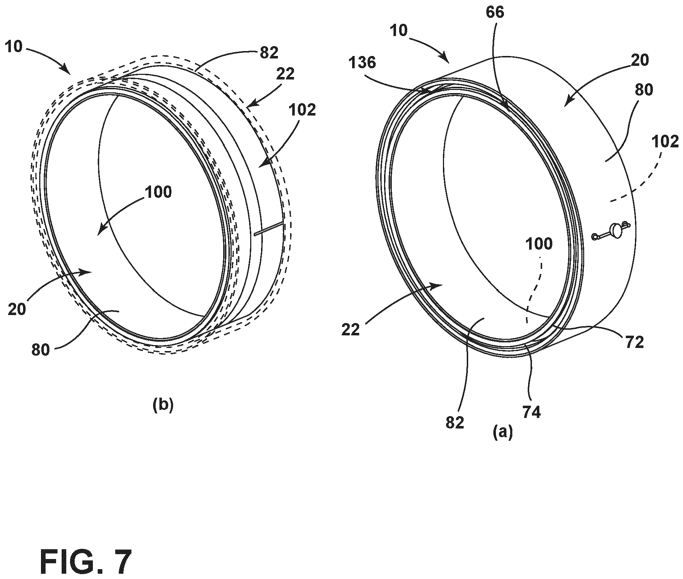

Referring again to FIGS. 4-7(b), a vehicle 40 can include a plurality of electrical control systems 42 that are disposed relative to a passenger cabin 44 (shown contextually in FIG. 1). These electrical control systems 42 can include at least one of an audio system, a voice activation system, a phone control system, a vehicle information system, and others. The control interface 10 is in communication with each of the electrical control systems 42, typically via a controller 32. Accordingly, a user can interact with the user interface 30 of the steering wheel 12 for operating these electrical control systems 42 without releasing the steering wheel 12 during operation of the vehicle 40.

As exemplified in the prior art images of FIGS. 1-3, a steering wheel 12 for a vehicle 40 includes the user interface 30 that can include a plurality of buttons 60, and other interface mechanisms, for accessing and controlling certain electrical control systems 42 within the vehicle 40. For operating this user interface 30, data and electricity may be transferred from the steering wheel 12 and to the electrical control systems 42, via the steering column 14. Accordingly, the attachment between a steering wheel 12 and a steering column 14, in the prior art aspects of the device, includes hard-wired connections 62, such as wire harnesses 64, that extend between the steering wheel 12 and steering column 14 for providing a pathway through which electricity and data communications can travel. As a user operates the steering wheel 12, the steering wheel 12 is rotated about the rotational axis 18 relative to the steering column 14. This operation of the steering wheel 12 relative to the steering column 14 twists, bends and otherwise manipulates the hard-wired connections 62. This manipulation places stress on these hard-wired connections 62. Over time, these hard-wired connections 62 can weaken and possibly become damaged due to the rotational movement of the steering wheel 12.

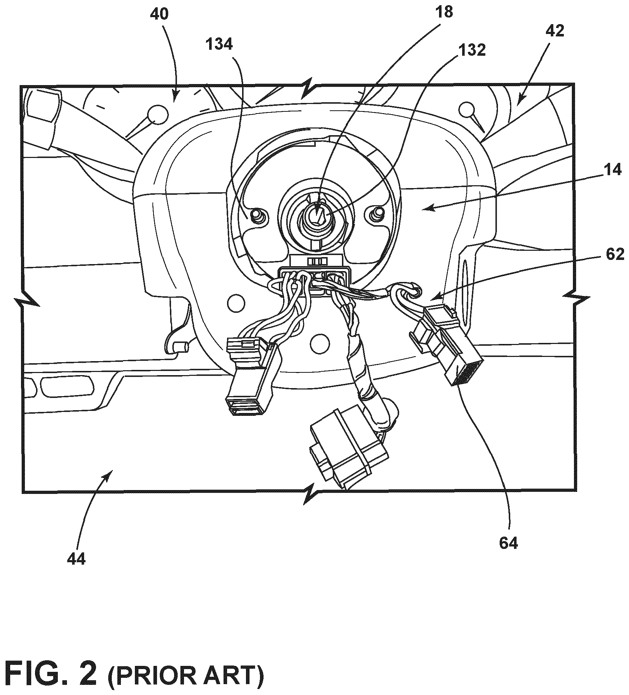

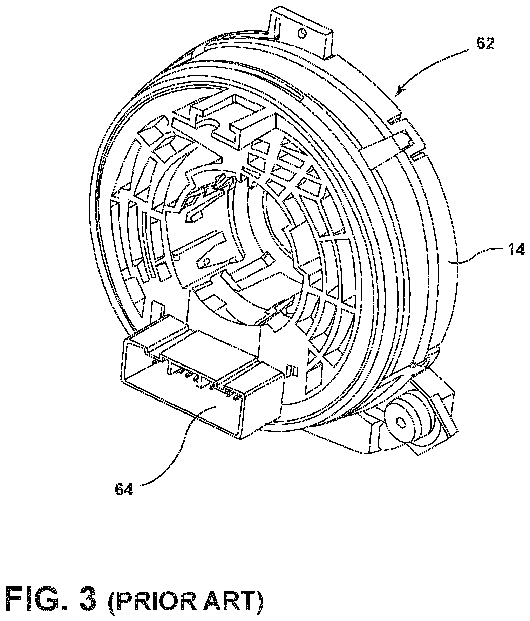

As exemplified in prior art FIGS. 2 and 3, certain wire harnesses 64 can be utilized for controlling the movement and flexion of the various wires that extend between the steering wheel 12 and the steering column 14 to minimize this damage. However, over time, the repeated stress and flexion of the wires can cause damage to the wire harnesses 64, resulting in a loss of functionality of the electrical control systems 42 via the user interface 30 of the steering wheel 12.

Within conventional steering wheels, as exemplified in prior art FIG. 3, hard-wired connections 62 to the steering wheel 12 are typically routed through a "clock spring" where coiled wire winds and unwinds relative to the steering wheel 12 as the steering wheel 12 rotates about a rotational axis 18 of the steering column 14. Because the device is a moving component, it typically has a limited life span with respect to wear and tear of the moving components, such as wiring.

Referring again to FIGS. 4-7(b), according to the various aspects of the device, the control interface 10 described herein is typically utilized for entertainment and comfort-related systems of the vehicle 40. In using the term "substantially free" of wires or wired connection, there are conditions where a wired connection may be required to comply with safety laws, rules, and regulations. In this manner, it should be understood that safety systems and systems related to the control of the steering assembly 16 typically include hard-wired or fixedly-attached connections such that a loss of electricity or loss of power will not prevent a user of the vehicle 40 from operating the steering assembly 16 via the steering wheel 12. Accordingly, systems such as the primary rotational operation of the steering wheel 12 can have a mechanical connection (or a hard-wired connection 62 of a steer-by-wire interface) of the steering column 14 to maintain connection with the steering assembly 16 even in the event of a loss of power. Additionally, certain auxiliary systems, such as a cruise control interface, may include a hard-wired connection 62 to maintain a secure communication pathway through which instructions can be provided between the steering assembly 16 and the steering wheel 12.

According to the various aspects of the device, as exemplified in FIGS. 4-7(b), the control interface 10 can include a number of pathways 66 through which data and electricity can travel between the steering wheel 12 and the steering column 14. These pathways 66 can include dedicated pathways 66 through which specific instructions can be provided with respect to dedicated electrical control systems 42. Accordingly, a particular pathway 66 can be dedicated to controls for the audio system, and another pathway 66 can be dedicated to a communications/hands free system, as an example. The pathways 66 described herein can be physical pathways 66 that are defined within the control interface 10. These pathways 66 can also be dedicated frequencies, patterns of signals 92, or various protocols that can be used to distinguish the signals 92 for the various electrical control systems 42.

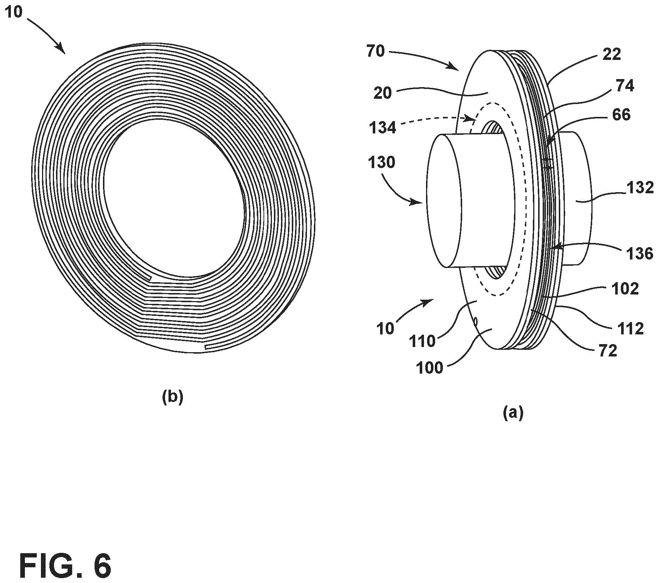

As exemplified in FIGS. 6(a)-7(b), the physical construction of the control interface 10 can vary. Typically, the control interface 10 will include a generally circular configuration to accommodate the rotational movement of the steering wheel 12 with respect to the steering column 14. As exemplified in FIGS. 6(a) and 6(b), the control interface 10 is in the form of a "pancake" interface where two opposing disks 70 are disposed in relation to one another. The first portion 20 and the second portion 22 rotate relative to one another such that a transmitter surface 72 of the first portion 20 operates relative to a receiver surface 74 of the second portion 22 to maintain connectivity therebetween. Within the opposing disks 70 of the "pancake" interface, and other aspects of the first portion 20 and the second portion 22, certain close-range communications interfaces can be disposed therein. These close-range communications interfaces can take the form of opposing inductive coils (exemplified in FIG. 6(b)), resonators, electrodes, capacitive resonator electrodes, combinations thereof, or other similar inductive assembly disposed therein for transferring electrical power and data communications between the steering wheel 12 and the steering column 14. In addition, the "pancake" interface can include various transmitters and receivers that can take the form of Radio Frequency Identification (RFID) tags, Near Field Communications (NFC), short range devices (SRD), combinations thereof, and other similar close-range communications interfaces.

As exemplified in FIGS. 6(a) - 6(b), the opposing disk 70 can include a first disk 110 that corresponds to the first portion 20 of the control interface 10, and a second disk 112 that corresponds to the second portion 22 of the control interface 10. The first disk 110 and the second disk 112 are configured to be placed in close engagement with one another to allow for the wireless communication therebetween. At the same time, the first disk 110 and the second disk 112 are spaced far enough apart that operation of the steering wheel 12 is not impeded by significant physical contact between the first disk 110 and the second disk 112.

As exemplified in FIGS. 7(a)-7(b), the control interface 10 can take the form of a "can" structure such that a cylindrical first portion 80 is positioned within an opposing cylindrical second portion 82, or vice versa. Rotational operation of the steering wheel 12 relative to the steering column 14 operates the first portion 20 relative to the second portion 22. In this aspect of the device, the first portion 20 and the second portion 22 of the control interface 10 can include electrodes for delivering electrical signals 92 through the control interface 10.

Referring again to FIGS. 4-7(b), according to various aspects of the device, a steering system 130 for the vehicle 40 includes the steering column 14 that is configured to be in communication with the steering assembly 16. The steering column 14 includes steering shaft 132 that rotationally operates within a sleeve 134. The steering wheel 12 is attached to the steering shaft 132 for operating the steering assembly 16. The steering wheel 12 includes the user interface 30 that is positioned on a surface of the steering wheel 12, typically in ready access to an operator of the vehicle 40, either through tactile interface, voice-control interface, or other similar interface that is located within the steering wheel 12. The control interface 10 extends between the steering wheel 12 and the steering column 14. The control interface 10 includes a first portion 20 that is coupled with the steering column 14, typically a static portion of the steering column 14, such as the sleeve 134. The control interface 10 also includes a second portion 22 that rotationally operates with respect to the first portion 20. The first portion 20 and the second portion 22 are in wireless communication with one another to place the user interface 30 in communication with a controller 32 that operates the electrical control system 42 or a plurality of electrical control systems 42.

Referring again to FIGS. 4-7(b), the first portion 20 of the control interface 10 is attached to the sleeve 134 of the steering column 14 and includes a receiver surface 74. The second portion 22 is attached to at least one of the steering wheel 12 and the steering shaft 132 and includes the transmitter surface 72. The transmitter surface 72 is in signal communication with the user interface 30 of the steering wheel 12 and the receiver surface 74 is in signal communication with at least one electrical control system 42 of the plurality of electrical control systems 42.

In certain aspects of the device, as exemplified in FIGS. 7(a)-7(b), the second portion 22 can be attached to the steering shaft 132 and the first portion 20 can be attached to an inner surface of the sleeve 134 of the steering column 14, the second portion 22 being rotationally operable within the first portion 20. In such an aspect of the device, the second portion 22 is the cylindrical second portion 82, such as an inner cylindrical member that rotationally operates within the first portion 20 that can take the form of the cylindrical first portion 80, also referred to as an outer cylindrical member. The transmitter surface 72 is defined on an outer surface of the inner cylindrical second portion 82. The receiver surface 74 can be defined on an inside surface of the outer cylindrica first portion 80. In this manner, the inner cylindrical second portion 82 and the outer cylindrical first portion 80 rotate with respect to one another and provide wireless communication therebetween for allowing for communication between the user interface 30 of the steering wheel 12 and the various electrical control systems 42. It should be understood that the locations of the cylindrical first portion 80 and the cylindrical second portion 82 can be switched such that the cylindrical first portion 80 rotates within the cylindrical second portion 82.

Referring again to FIGS. 4-7(b), the first portion 20 and the second portion 22 can define two-way wireless communication therebetween. In such an aspect of the device, the first portion 20 can include a supplemental transmitter surface and the second portion 22 can include a supplemental receiver surface. Accordingly, each of the first portion 20 and the second portion 22 includes a transmitter surface 72 and a receiver surface 74. In this manner, the first portion 20 and the second portion 22 define the two-way communication interface between the user interface 30 and the plurality of electrical control systems 42. This two-way wireless communication can be used to allow the user interface 30 to provide instructions to the electrical control systems 42 via the user interface 30. The electrical control systems 42, in turn, can provide feedback or responsive communications back to the user interface 30 or to the operator by a certain signal 92 or indicia.

Referring again to FIGS. 4-7(b), the steering system 130 for the vehicle 40 includes the steering column 14 having the steering shaft 132 that rotates within the sleeve 134. The steering shaft 132 is configured to be in communication with the steering assembly 16. The steering wheel 12 is attached to the steering shaft 132 for operating the steering assembly 16. The steering wheel 12 is configured to be disposed within the passenger cabin 44 and includes the user interface 30 that incorporates controls for operating the electrical control systems 42 of the vehicle 40, via the controller 32, as discussed herein. The plurality of electrical control systems 42 are operated by the controller 32 that is external to the steering wheel 12 and external to the steering column 14. The control interface 10 includes the first portion 20 that is coupled to the sleeve 134 of the steering shaft 132. The control interface 10 also includes the second portion 22 that is coupled with at least one of the steering wheel 12 and the steering shaft 132. The first portion 20 and the second portion 22 are in wireless communication with one another to place the user interface 30 in communication, via the wireless communication, with at least one electrical control system 42 of the plurality of electrical control systems 42.

Through this configuration, the control interface 10 allows for the delivery of electrical power and the transfer of data communications between the user interface 30 of the steering wheel 12 to the controller 32 without the use of a wired connection between the rotationally operable steering wheel 12 and the static sleeve 134 of the steering column 14. Accordingly, the control interface 10 is able to provide a consistent and steady interface for electrical power and data communications without using wired connections. As described herein, these wired connections and other physical connections can wear out and become damaged over time due to repeated motions and the material fatigue resulting therefrom.

In certain aspects of the device that may include the "can" structure, the first portion 20 can be defined by the outer cylindrical member, also referred to herein as the cylindrical first portion 80. Similarly, the second portion 22 can be defined by an inner cylindrical member, also referred to herein as the cylindrical second portion 82. In this environment of the device, an inner communications surface is defined on an outer surface of the inner cylindrical member. An outer communications surface is defined on an inside surface of the outer cylindrical member. Through this configuration, the wireless communication between the first portion 20 and the second portion 22 can be achieved. The size of the "can" structure can vary. By way of example and not limitation, the height of the second cylindrical portion can be from approximately 10 millimeters in height to approximately 40 millimeters in height. The outer diameter of the cylindrical first portion 80 will typically match the inner diameter of the sleeve 134 for the steering column 14. The inner diameter of the cylindrical second portion 82 will typically match the outer diameter of the steering shaft 132.

According to the various aspects of the device, the thickness of the gap 136 defined between the first portion 20 and the second portion 22 can vary. By way of example, and not limitation, this gap 136 can be from approximately 0.1 millimeters, to approximately 12 millimeters. It should be understood that variations in these dimensions can vary depending on the dimensions of the vehicle 40.

As exemplified in FIGS. 4-7(b), during operation of the control interface 10, certain frequencies, voltages, and other ranges of signals 92 can be utilized for distinguishing between commands for one electrical control system 42 versus another electrical control system 42. Accordingly, engagement of a particular section of the user interface 30 of the steering wheel 12 can instruct a controller 32 to deliver a particular electrical signal 92 through the control interface 10 for operating a corresponding electrical control system 42. Interacting with a separate section of the user interface 30 can provide the controller 32 with an instruction to deliver a separate electrical signal 92 having a different voltage or frequency signal that is indicative of a signal 92 for a separate electrical control system 42 of a vehicle 40. Accordingly, the user interface 30 and a controller 32 can be utilized cooperatively for delivering instructions, via signals 92, through the control interface 10 without the need for separate hard-wired connections 62 that are disposed within and attached to each electrical control system 42 of the vehicle 40.

According to the various aspects of the device, the control interface 10 can take any one of various forms that provide for rotary operation of the control interface 10 without the requirement of physical hard-wired connections 62 extending therebetween. One such structure is the use of electrical brushes. These brushes maintain a sliding contact between the first portion 20 of the control interface 10 and the second portion 22 of the control interface 10 such that electrical signals 92 can be transferred therebetween. The brushes operate in relation to certain contacts that allow for the delivery of these electrical signals 92 between the first portion 20 and the second portion 22 of the control interface 10.

According to the various aspects of the device, the control interface 10 can also take the form of a slip ring that extends between the first portion 20 and the second portion 22 of the control interface 10. This slip ring provides for a consistent electrical interaction between the first portion 20 and the second portion 22 of the control interface 10. These slip rings can be in the form of rigid or flexible metallic contacts, conductive fluids that are disposed within a space defined between the first portion 20 and the second portion 22 of the control interface 10, and other similar mechanisms that maintain electrical communication between the user interface 30 and the various electrical control systems 42 via the first portion 20 and the second portion 22 of the control interface 10.

According to various aspects of the device, the control interface 10 can take the form of a rotary transformer that extends between the first portion 20 and the second portion 22 of the control interface 10. This rotary transformer can include concentric coils that are positioned relative to a ferrite core. The rotary transformer provides for electrical communication between two components that are rotationally operable to one another. Operation of the rotary transformer includes opposing coils that can communicate with one another when at least one of the coils is energized. Energizing of one coil produces an inductive electrical current in an opposing coil such that signals 92 can be transferred between the first portion 20 and the second portion 22 of the rotary interface.

According to the various aspects of the device, a steering wheel 12 typically rotates a number of revolutions with respect to a steering column 14 through a full range of motion of the steering wheel 12. In conventional steering wheels, this range of motion can complicate hard-wired electrical connections 62 within the steering wheel 12 relative to the steering column 14. The control interface 10 described herein provides for a connection that is free of hard-wired connections 62 and uses the alternative forms of electrical power and data connections, as described herein, for delivering signals 92 between the steering wheel 12 and the steering column 14.

According to certain aspects of the device, as exemplified in FIGS. 4-7(b), data is transmitted by means of a transmitter coil 100 that is located within the steering column 14 while a receiver coil 102 is disposed within the steering wheel 12. In certain aspects of the device, each of the first portion 20 and the second portion 22 of the control interface 10 can include a transmitter surface 72 or transmitter coil 100 as well as a receiver surface 74 or receiver coil 102. In such an aspect of the device, each transmitter surface 72 or transmitter coil 100 generally aligns with a corresponding receiver surface 74 or receiver coil 102 for providing two-way communications and electrical signals 92 through the control interface 10.

As exemplified in FIGS. 4-7(b), data is transmitted through the control interface 10 typically by means of interruptions, amplitude or frequency modifications in the signal 92 that is delivered between the transmitter coil 100 and the receiver coil 102 (or between the transmitter surface 72 and the receiver surface 74). Power and data communications for the steering wheel 12 can be provided by the user interface 30 and the electrical control system 42, working in combination, as described herein. The control interface 10 can be used for providing data and electrical signals 92 for the buttons 60 of the user interface 30, backlighting for the user interface 30 and the remainder of the steering wheel 12, various sensors located within the steering wheel 12, heating of the steering wheel 12, and other electrical control systems 42. As described herein, certain safety features such as air bags may or may not be connected with the control interface 10.

In the various wireless connection systems described herein, the control interface 10 is able to discriminate various signals 92 that are delivered from the user interface 30 of the steering wheel 12. Accordingly, the control interface 10 provides the plurality of dedicated pathways 66 or dedicated signals 92 that can be delivered therethrough for ultimate delivery to the controller 32 or to the electrical control system 42. Accordingly, the control interface 10 is configured to provide for the delivery of a range of signals 92 or instructions that are used to operate a specific aspect of one electrical control system 42 of a plurality of electrical control systems 42. In this manner, the control interface 10 using the wireless connection maintains the integrity of the signal 92 so that the signal 92 is delivered to the appropriate location.

According to the various aspects of the device, as described herein, use of the control interface 10 provides for an electrical power and data communications interface that operates in a rotational fashion between the first portion 20 and the second portion 22 of the rotary control interface 10. This is done in a manner that is free of hard-wired connections 62. Rather, electrical connections that are able to rotate with respect to one another can be implemented, as described herein, for achieving the delivery of electrical power and the transfer of data communications between the steering wheel 12 and the remainder of the vehicle 40 via the steering column 14. It is contemplated that the control interface 10 can be utilized for certain steering functions such as a steer-by-wire interface for controlling the steering assembly 16, wireless communications for a cruise control system, and other similar data transfer features. Typically, the control interface 10 described herein is used in conjunction with data and information systems, entertainment systems, and comfort-related systems. It is contemplated that the control interface 10 described herein provides for a system that minimizes wear and tear within the system due to the design that provides for rotary operation between the steering wheel 12 and the steering column 14 that is free of wires, or substantially free of wires. Again, this is accomplished without compromising the structural integrity of the control interface 10 for the delivery of electrical power and the transfer of data communications defined between the steering wheel 12 and the steering column 14.

According to one aspect of the present disclosure, a steering system for a vehicle includes: a steering column that is configured to be in communication with a steering assembly and that has a steering shaft that rotationally operates within a sleeve; a steering wheel that is attached to the steering shaft for operating the steering assembly and that includes a user interface; and, a control interface that extends between the steering wheel and the steering column. The control interface has a first portion coupled with the steering column, and a second portion coupled with the steering wheel. The second portion rotationally operates with respect to the first portion. The first portion and the second portion are in wireless communication with one another to place the user interface in communication with a controller that operates at least one electrical control system.

According to another aspect, the first portion and the second portion include at least one of opposing inductive coils, resonators, and electrodes to define the wireless communication therebetween.

According to another aspect, the at least one electrical control system includes at least one of an audio system, a voice activation system, a phone control system, and a vehicle information system.

According to another aspect, the first portion of the control interface includes a first disk and the second portion of the control interface includes a second disk, wherein the first disk and the second disk are positioned in opposition to one another to define a close-range communications interface.

According to another aspect, the first portion is attached to the sleeve of the steering column and includes a receiver surface, and wherein the second portion is attached to at least one of the steering wheel and the steering shaft and includes a transmitter surface.

According to another aspect, the transmitter surface is in signal communication with the user interface of the steering wheel and the receiver surface is in signal communication with the at least one electrical control system.

According to another aspect, the second portion is attached to the steering shaft and the first portion is attached to an inner surface of the sleeve of the steering column, the second portion being rotationally operable within the first portion.

According to another aspect, the second portion is an inner cylindrical member that rotationally operates within the first portion that is an outer cylindrical member, wherein the transmitter surface is defined on an outer surface of the inner cylindrical member, and wherein the receiver surface is defined within an inside surface of the outer cylindrical member.

According to another aspect, the transmitter surface and the receiver surface are configured to define two-way communications between the user interface and the at least one electrical control system.

According to another aspect, at least one hard-wired connection extends between the steering column and the steering wheel, wherein the at least one hard-wired connection is configured to attach to the steering assembly.

According to another aspect of the present disclosure, a steering system for a vehicle includes: a steering column having a steering shaft that rotates within a sleeve and that is configured to be in communication with a steering assembly; a steering wheel that is attached to the steering shaft for operating the steering assembly, that includes a user interface, and that is configured to be disposed within a passenger cabin; a plurality of electrical control systems that are operated by a controller that is external to the steering wheel and the steering column; and, a control interface having a first portion coupled to the sleeve of the steering shaft, and a second portion coupled with at least one of the steering wheel and the steering shaft. The first portion and the second portion are in wireless communication with one another to place the user interface in communication with at least one electrical control system of the plurality of electrical control systems.

According to another aspect, the first portion and the second portion define a two-way wireless communication therebetween.

According to another aspect, the first portion of the control interface includes a first disk and the second portion of the control interface includes a second disk, wherein the first disk and the second disk are positioned in opposition to one another to define a close-range communications interface.

According to another aspect, the second portion is an inner cylindrical member that rotationally operates within the first portion that is an outer cylindrical member, wherein a transmitter surface of the second portion is defined on an outer surface of the inner cylindrical member, and wherein a receiver surface of the first portion is defined within an inside surface of the outer cylindrical member.

According to another aspect, the transmitter surface delivers a signal from the user interface to the receiver surface, and the receiver surface delivers the signal to the at least one electrical control system of the plurality of electrical control systems.

According to another aspect, the second portion also includes a supplemental receiver surface and the first portion includes a supplemental transmitter surface that are in wireless communication with one another to define two-way communications between the user interface and the plurality of electrical control systems.

According to another aspect, the controller is in communication with at least one of an audio system, a voice activation system, a phone control system, and a vehicle information system.

According to yet another aspect of the present disclosure, a steering system for a vehicle includes: a steering column that is configured to be in communication with a steering assembly; a steering wheel that is attached to the steering column for operating the steering assembly; and, a control interface that extends between the steering wheel and the steering column. The control interface has a first portion attached to the steering column, and a second portion attached to the steering wheel. The second portion rotationally operates relative to the first portion, and the first portion and the second portion are in wireless communication with one another.

According to another aspect, the first portion of the control interface includes a first disk and the second portion of the control interface includes a second disk, wherein the first disk and the second disk are positioned in opposition to one another to define a close-range communications interface.

According to another aspect, the second portion is an inner cylindrical member that rotationally operates within the first portion that is an outer cylindrical member, wherein an inner communications surface is defined on an outer surface of the inner cylindrical member, and wherein an outer communications surface is defined within an inside surface of the outer cylindrical member.

It will be understood by one having ordinary skill in the art that construction of the described disclosure and other components is not limited to any specific material. Other exemplary embodiments of the disclosure disclosed herein may be formed from a wide variety of materials, unless described otherwise herein.

## Claims

1. A steering system (130) for a vehicle (40), the steering system (130) comprising:
a steering column (14) that is configured to be in communication with a steering assembly (16), the steering column (14) having a steering shaft (132) that rotationally operates within a sleeve (134);
a steering wheel (12) that is attached to the steering shaft (132) for operating the steering assembly (16), the steering wheel (12) including a user interface (30); and
a control interface (10) that extends between the steering wheel (12) and the steering column (14), the control interface (10) having a first portion (20) coupled with the steering column (14), and a second portion (22) coupled with the steering wheel (12), wherein the second portion (22) rotationally operates with respect to the first portion (20), and wherein the first portion (20) and the second portion (22) are in wireless communication with one another to place the user interface (30) in communication with a controller (32) that operates at least one electrical control system (42).

2. The steering system (130) of claim 1, wherein the first portion (20) and the second portion (22) include at least one of opposing inductive coils, resonators, and electrodes to define the wireless communication therebetween.

3. The steering system (130) of any one of claims 1-2, wherein the at least one electrical control system (42) includes at least one of an audio system, a voice activation system, a phone control system, and a vehicle information system.

4. The steering system (130) of any one of claims 1-3, wherein the first portion (20) of the control interface (10) includes a first disk (110) and the second portion (22) of the control interface (10) includes a second disk (112), wherein the first disk (110) and the second disk (112) are positioned in opposition to one another to define a close-range communications interface.

5. The steering system (130) of any one of claims 1-4, wherein the first portion (20) is attached to the sleeve (134) of the steering column (14) and includes a receiver surface (74), and wherein the second portion (22) is attached to at least one of the steering wheel (12) and the steering shaft (132) and includes a transmitter surface (72).

6. The steering system (130) of claim 5, wherein the second portion (22) is attached to the steering shaft (132).

7. The steering system (130) of any one of claims 5-6, wherein the transmitter surface (72) is in signal communication with the user interface (30) of the steering wheel (12).

8. The steering system (130) of claim 7, wherein the receiver surface (74) is in signal communication with the at least one electrical control system (42).

9. The steering system (130) of claim 5, wherein the second portion (22) is attached to the steering shaft (132) and the first portion (22) is attached to an inner surface of the sleeve (134) of the steering column (14).

10. The steering system (130) of claim 9, wherein the second portion (22) is rotationally operable within the first portion (20).

11. The steering system (130) of any one of claims 9-10, wherein the second portion (22) is an inner cylindrical member that rotationally operates within the first portion (20) that is an outer cylindrical member, wherein the transmitter surface (72) is defined on an outer surface of the inner cylindrical member, and wherein the receiver surface (74) is defined within an inside surface of the outer cylindrical member.

12. The steering system (130) of any one of claims 5-11, wherein the transmitter surface (72) and the receiver surface (74) are configured to define two-way communications between the user interface (30) and the at least one electrical control system (42).

13. The steering system (130) of any one of claims 1-12, wherein at least one hard-wired connection (62) extends between the steering column (14) and the steering wheel (12), wherein the at least one hard-wired connection (62) is configured to attach to the steering assembly (16).

14. The steering system (130) of any one of claims 1-13, wherein the control interface (10) defines a plurality of pathways (66) for delivering electricity and data communications therebetween.

15. The steering system (130) of claim 14, wherein the plurality of pathways (66) are dedicated pathways (66) that distinguish signals (92) for the at least one electrical control system (42).
